# EUROPEAN PATENT APPLICATION

(11) **EP 2 778 862 A1**
(43) Date of publication of application: **17.09.2014**
(21) Application number: 13158982.2
(22) Date of filing: 13.03.2013
(51) Int. Cl.: G06F 3/0354, G06F 3/0488

(54) **Push-button switch with touch sensitive surface**

(71) Applicant: Delphi Technologies, Inc., Troy, MI 48007 (US)
(72) Inventor: Lipka, Janusz, 02-266 Warszawa (PL); Boron, Artur, 32-070 Czernichow (PL)
(74) Representative: Neill, Andrew Peter

(57) **Abstract**

A switch including a member adapted to be movable from a first to a second position, and a touch sensitive pad, said pad adapted to receive an input gesture, and including means to recognise said input gesture, the switch being further configured to move to an "on" or "off' state if both the input gesture is recognised and the movable member is moved from said first to said second position.

## Description

### Technical Field

This invention relates to switches, such as button type switches. It has particular but not exclusive application to button-type switches used in automotive applications so as to control the ignition and activation of a vehicle, engine, or any ancillary system therefor.

### Background of the Invention

In known automotive systems, there are two types of engine start/stop switch (activator) systems which are commonly used. One is the ignition key system where a key is inserted into a housing, for example to unlock a rotatable drum, located within the housing, in order to start ignition.

A known alternative is the use of a simple engine start/stop switch, usually consisting of a push button. Such a switch is usually a monostable switch.

The problem with button switches is that although they may be preferred by drivers, they are easy to activate unintentionally, i.e. accidentally.

It is an object of the invention to provide a switch which is difficult to activate unintentionally.

### Summary of the Invention

In one aspect, the invention comprises a switch including a member adapted to be movable from a first to a second position, and including a touch sensitive pad, said pad adapted to receive an input gesture, and including means determine if the input gesture is recognisable, the switch being further configured to move to an "on" or "off" state if both the input gesture is recognised, and the movable member is actuated from said first to said second position. The movable member may be a the push-button of a push-button type switch. The touch sensitive screen may be located on said movable member.

The means to determine if the input gesture is recognisable may comprise means to compare said input gesture with predetermined or stored gesture(s).

The touch sensitive pad may include or be adjacent to a groove/ridge of predetermined shape/form. The groove/ridge may be formed by the junction of said touch sensitive pad and a portion or component of the switch. There may be means to detect if said input gesture conforms to said groove/ridge shape, as well as means to detect if the locus of said input gesture conforms to said groove shape/form along a substantial and/or predetermined length or portion of said groove. The locus or groove shape/form is preferably circular and preferably further adapted such that the switch can only be activated if the input gesture/locus moves at least 360° around said groove.

The switch may be an automotive ignition switch.

Thus, in aspects of the invention, touch sensing technology such as the use of touch sensitive pads are used in conjunction with a conventional type switches and operations thereof. This provides at least two pre-requisite (necessary) steps (e.g., input of recognizable gesture and button depressing) to be completed or performed before a vehicle engine, for example, is activated.

### Brief Description of the Drawings

The present invention will now be described, by way of example, with reference to the accompanying drawings, in which:
Figure 1 shows a three-dimensional view of a button type switch according to one aspect of the invention.
Figure 2 shows elevational views of the switch of figure 1 in two operational (on/off) states.
Figure 3 shows plan views of switches according to embodiments showing possible input gestures.
Figures 4a and 4b shows plan and sectional side view of the switch of figure 1.
Figure 5 shows a sectional view of an alternative example similar to the figure 4 example.
Figure 6 shows an alternative example of how the touch sensitive pad and depressable are arranged to form a circumferential ridge or groove.

### Description of the Preferred Embodiments

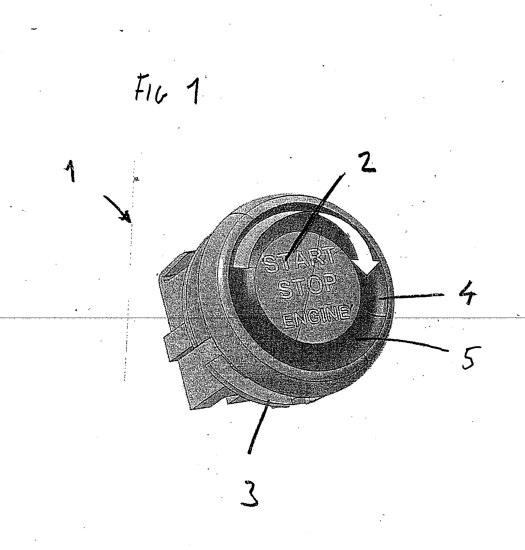

Figure 1 shows a button type switch 1 according to one aspect of the invention. It includes a generally circular front member 2 which can be depressed. The depression of the switch is a pre-requisite for starting an engine for example. The member 2 is located centrally, and depressable within a generally cylindrical body or housing 3. The depressable member 2 may be resiliently mounted by spring means (not shown), and includes electrical contact means, operatively connectable to complementary electrical contact means within the base of the housing in order to, for example, complete an electrical circuit. These latter components are not shown or described in detail as they are well known.

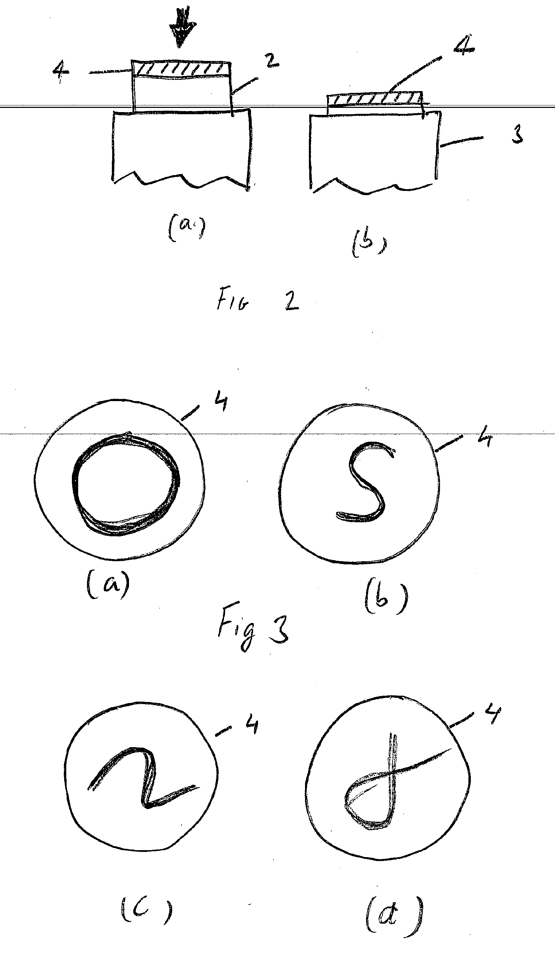

Figures 2a and b show side elevations of the button switch in two operational states (e.g. off/on); a non-depressed and depressed state respectively. On the surface of the button is located a touch sensitive pad 4. Touch sensitive pads and screens are known in the art, and will also not be described in any detail here. For the purpose of the invention, it is to be mentioned that such touch sensitive pads allow a user to contact the pad (e.g. by touching the pad with his finger), and input a gesture; that is, move his finger along a locus. Movement of, e.g. a finger, is detectable and recognisable by the touch sensitive pad. The touch sensitive pad is operationally connected to processor means (not shown) which can detect and recognise touch, as well as the characteristics of finger movement, gesture, locus, etc. The processing means can also determine whether the locus (input gesture) corresponds to a predetermined (allowable) locus (gesture) by comparison methods. If it the input locus/gesture corresponds an allowable locus/gestures, the switch can be configured to be movable to an "on" position, e.g. the button can (subsequently) be depressed. Thus, in order to activate the switch, two operations are required. Alternatively the button is always depressable, but its actuation will have no effect unless the gesture is recognised.

Figures 3a to d show a number of different finger gestures which can be inputted by an operator's finger by contact and movement of a finger-tip along the touch sensitive pad 4. It should be clear to the skilled person that any gesture could be inputted and aspects of the invention are not limited to this. The gestures show loci of finger movement generally required to be recognised. The figure shows "O", "S" and squiggly shapes.

The processor means may include means to store (predetermined) gestures and compare these with those which are input by an operator. In order to operate the button switch, the operator contacts the touch sensitive pad with, e.g. a finger, and inputs a particular gesture. If the gesture is recognised, by suitable processing, the operator will be able to depress the depressable member so as to start the engine. In an alternative, as mentioned, depressing the button may always be possible, but will only have the effect of starting the engine if the gesture input is recognised. If the gesture is not recognised as an acceptable gesture, depressing the depressable member may be prevented or will have no effect.

Thus, such examples provide a 2-step process for starting the engine; the first is that the operator has to input a recognisable figure gesture, and secondly the operator has to depress the button (depressable member). Of course it is important to understand that these operations do not have to take place in any particular order. The button may first be depressed, and then the finger gesture input.

Of course the invention is not limited to have the touch sensitive pad on the depressable member. The touch sensitive pad may be located cylindrically around the switch housing 3.

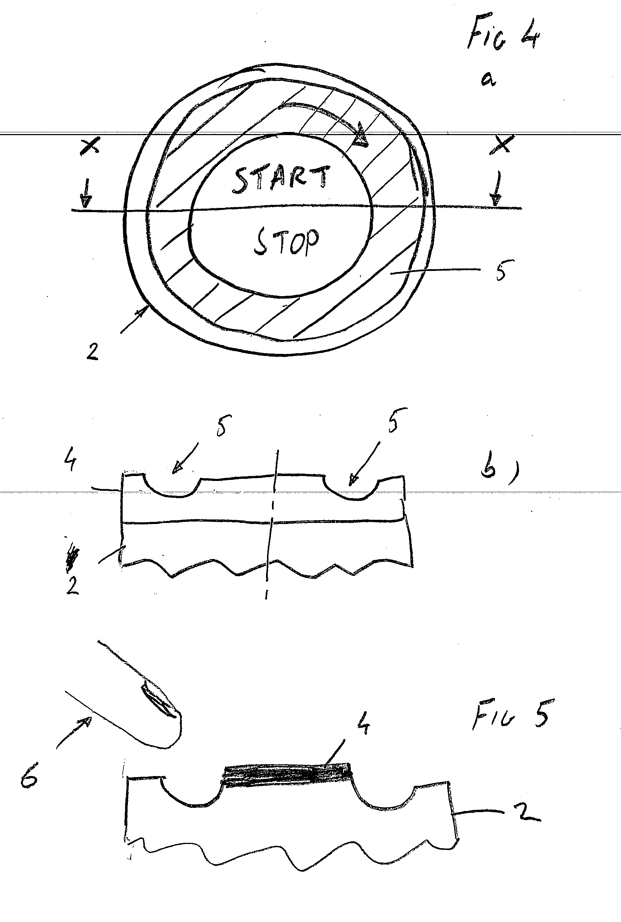

A preferred embodiment will now be described with reference to figure 4. Figure 4a shows a plan view of a push button (movable member) of similar construction to that described with reference to previous figures, and includes the same reference numbers for like components. Figure 1 also shows a 3-dimensional view of the same switch of figure 4, and figure 4 specifically shows a portion of the depressable button 2 thereof. Figures 1, 4a and 4b all how the inclusion of a groove 5. The depressable member (circular button) in the example includes the groove 5, which in the example is circular. The groove may be located in or along the touch sensitive pad 4 (i.e. the touch sensitive pad includes the grooves) which is located on the button (depressable member 2). This groove (or recess) can be of any form and preferably conforms to the input gesture/locus to be recognised. Thus the groove is shaped according to the gesture pattern, and allows the operator to move a finger 6 along the groove. Figure 4b a sectional view respectively along axis X-X to show the groove.

The touch sensitive pad may not need to include the groove. The groove may be located on any component or member (such as the depressable button or housing), and the touch sensitive pad may be located adjacent to the groove. For example the groove may be located as a circle on the depressable button member, and the touch sensitive pad may comprise a concentrically located disc, whose outer circumference is generally coincident with the inner circumference of the groove, as shown in figure 5, where reference numerals correspond to the components in the other figures.

Such embodiments which include grooves have advantages in that it means the input gesture will conform more to a recognisable (allowable) gesture. In other words, the groove forces/enables the operator to move his finger along a pre-determined path, easily and without significant deviation. The comparison can be done quicker as the input gesture corresponds closely, if not identically, to that required to be input. Thus comparison can be very quickly performed and it can be quickly determined, without substantial trial and error, that the operator intends to activate the button and switch on the engine. This reduces significantly the number of non-recognisable input gestures which may be attempted, which would is frustrating for the operator.

In a further preferred embodiment, the operator may be required to input the gesture along a substantial length of the groove/locus e.g. at least 80 or 90% of the groove or possible more, even 100% or more. For example, in the case of the figure 4 example, the operator may be required to move/translate his finger along at least 360° along the circular groove.

The groove may preferably conform to the shape of the end of a figure, by being of a smooth concave profile.

The touch sensitive (gesture input) pad may not need to be on the depressable member. The touch sensitive may alternatively be located on the exterior of the housing of the button switch. In this way operator may need to rotate his finger around the housing, by say at least 360°. This has the advantage that a groove may not be necessary.

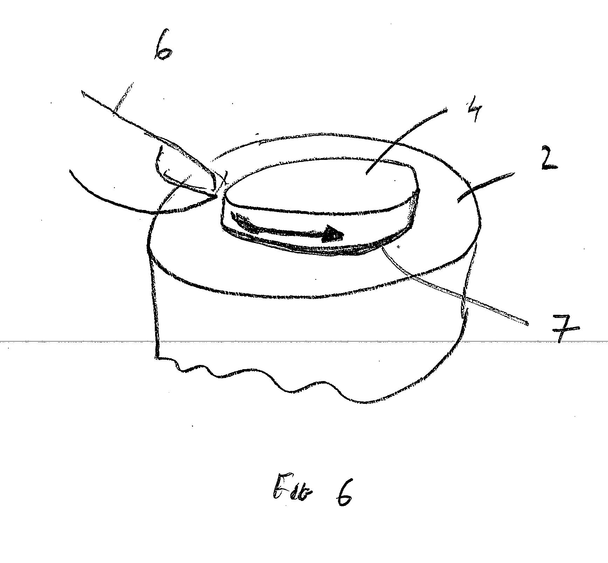

In alternative embodiments, a pre-formed groove may be dispensed and alternatively provided by ridges or other suitable recesses. In a preferred embodiment, where the touch sensitive pad is located onto the switch, (e.g. either onto the depressable member or the body of the switch) there may be formed a natural recess or groove without the need to manufacture one. Figure 6 shows how a touch sensitive pad or touch sensitive member sits proud on the depressable member 2. A natural convex ridge is formed of angle 90° around the circumference of the touch sensitive pad. Movement of a finger 6 can be guided along this ridge as shown by the arrow. In other words, the groove/ridge is formed by the junction of said touch sensitive pad and portion of the switch.

Although so far the disclosure has described switches which require the steps of actuating a movable member and receiving a recognisable gesture in order to move the switch to an operationally "on" position, the switch may be adapted to require such steps to move to an "off " state, alternatively, or in addition. Such a switch is useful for in power applications where accidental switching of systems may cause problems.

In aspects of the invention, subsequent depression of the push button (activation of the moveable member) is not necessary and so these examples, inputting a gesture via the groove can activate the switch on its own without the need for subsequent depression of a push button switch and such like. In other words, in examples, a switch may be provided which does not have a moveable member. The invention thus covers switching mechanism (to turn on/off or activate/deactivate a system) comprising a touch sensitive pad and groove to input a gesture in order to switch.

The above description is considered that of the preferred embodiments only. Modifications of the invention will occur to those skilled in the art and to those who make or use the invention. Therefore, it is understood that the embodiments shown in the drawings and described above are merely for illustrative purposes and not intended to limit the scope of the invention, which is defined by the following claims as interpreted according to the principles of patent law, including the doctrine of equivalents.

## Claims

1. A switch including a member adapted to be movable from a first to a second position, and including a touch sensitive pad, said pad adapted to receive an input gesture, and including means to determine if the input gesture is recognisable, the switch being further configured to move to an "on" or "off" state if both the input gesture is recognised, and the movable member is actuated from said first to said second position.

2. A switch as claimed in claim 1 wherein said movable member is the push-button of a push-button type switch.

3. A switch as claimed in claims 1 or 2 wherein said touch sensitive screen is located on said movable member.

4. A switch as claimed in claim 1 wherein said means to determine if the input gesture is recognisable comprises means to compare said input gesture with predetermined or stored gesture(s).

5. A switch as claimed in any preceding claim where said touch sensitive pad includes or is adjacent to a groove/ridge ofpredetermined shape/form.

6. A switch as claimed in any preceding claim wherein said groove/ridge is formed by the junction of said touch sensitive pad and a portion or component of the switch.

7. A switch as claimed in claim 5 or 6 including means to detect if said input gesture conforms to said groove/ridge shape.

8. A switch as claimed in claims 5 to 7 including means to detect if the locus of said input gesture conforms to said groove shape/form along a substantial and/or predetermined length or portion of said groove.

9. A switch as claimed in any preceding claim wherein said locus or groove shape/form is circular.

10. A switch as claimed in claim 9 adapted such that the switch can only be activated if the input gesture/ locus moves at least 360° around said groove.

11. A switch as claimed in any preceding claim which is an automotive ignition switch.
